# EUROPEAN PATENT SPECIFICATION

(11) **EP 1 878 193 B1**
(45) Date of publication and mention of the grant of the patent: **16.07.2008**
(21) Application number: 06724572.0
(22) Date of filing: 26.04.2006
(51) Int. Cl.: H04L 29/06, H04Q 7/22

(54) **VOICE SERVICE INTEGRATION IN IMS SERVICES**
VOICE-DIENSTINTEGRATION IN IMS-DIENSTEN
INTEGRATION DE SERVICES VOCAUX DANS DES SERVICES IMS

(30) Priority: 29.04.2005 EP 05009452
(43) Date of publication of application: 16.01.2008
(73) Proprietor: T-Mobile International AG, 53227 Bonn (DE)
(72) Inventor: SÄNGER, Georg, 53545 Linz (DE); VÖHRINGER, Gerrit, 53111 Bonn (DE)
(74) Representative: Riebling, Peter
(86) International application number: PCT/EP2006/003842
(87) International publication number: WO 2006/117107

(56) References cited:
- US-A1- 2002 196 775
- US-B1- 6 222 829
- US-B1- 6 314 284

## Description

The present invention generally relates to IMS (IP based Multimedia Subsystem) services, and more particularly to a method and a system for integrating standard voice telecommunication services, as they are offered in GSM or UMTS mobile communication networks, into IMS Services.

IMS Services enable the support for IP multimedia applications within GMS / UMTS mobile communication systems. IMS enables operators of Public Land Mobile Networks (PLMN) to offer their subscribers multimedia services based on and built upon Internet applications, services and protocols. One integral part of IMS services offered to the customer in mobile networks shall be services to interoperate with standard basic voice communication services as they are offered in GSM and UMTS.

US 2002/0196775 A1 discloses a method to enhance functionality of the Signaling Relay Function (SLRF) for support of MNP (MNP-SRF) so that the normal HLR query in the circuit switched domain is bypassed and the call is routed to an IMS domain. The SLRF, upon receipt from a GMSC a SRI message containing the real MSISDN number of the called party, translates the MSISDN number to a new MSISDN number and responds to the query by sending a message containing routing information to the IMS domain and the new MSISDN number. Alternatively, the original MSISDN number is used in the response message but a certain identifier is then added into the message. Then the called subscriber is first tried to reach in the IMS domain where the subscriber is likely residing. In case the subscriber yet resides in the circuit switched domain the call is routed from the IMS domain back to the circuit switched domain and not until then the normal HRL query is performed.

The method gives a possibility to provide the IMS preferred service to a subscriber who has ported from the CS domain to the IMS domain and also gives possibility to reach the subscriber in the CS domain as a roaming subscriber.

It is the object of the present invention, to provide a method and system for enabling standard voice communication services to be used within an IMS services domain.

This object is achieved by providing a method and a system for enabling voice telecommunication services to subscribers of an IMS services domain, as described in the independent claims.

Other features which are considered to be characteristic for the invention are set forth in the dependent claims.

To enable an IMS subscriber to receive terminated circuit switched voice calls originated in Public Switched Telephone Systems (PSTN) and/or PLMNs, a function in the Mobile Switching Centres (MSC) and the Home Location Register (HLR) of GSM/UMTS is provided to route incoming and originated calls with destination to an IMS subscriber to an adequate gateway in the IMS domain. A MSC is a telecommunication switch or exchange within a cellular network architecture which is capable of interworking with location databases, for example the HLR. The HLR is a database within the subscribers Home PLMN (Home Public Land Mobile Network). It provides routing information for MT (Mobile Terminated) calls and SMS (Short Message Service). It is also responsible for the maintenance of user subscription information. This is distributed to the relevant VLR (Visitor Location Register) or SGSN (Serving GPRS Support Node) through the attach process and mobility management procedures such as Location Area and Routing Area updates.

The function proposed by the present invention allows for standard voice service integration into IMS services.

The method of operation of the invention, together with additional objects and advantages thereof, will be best understood from the following description of a preferred embodiment when read in connection with the accompanying drawing.

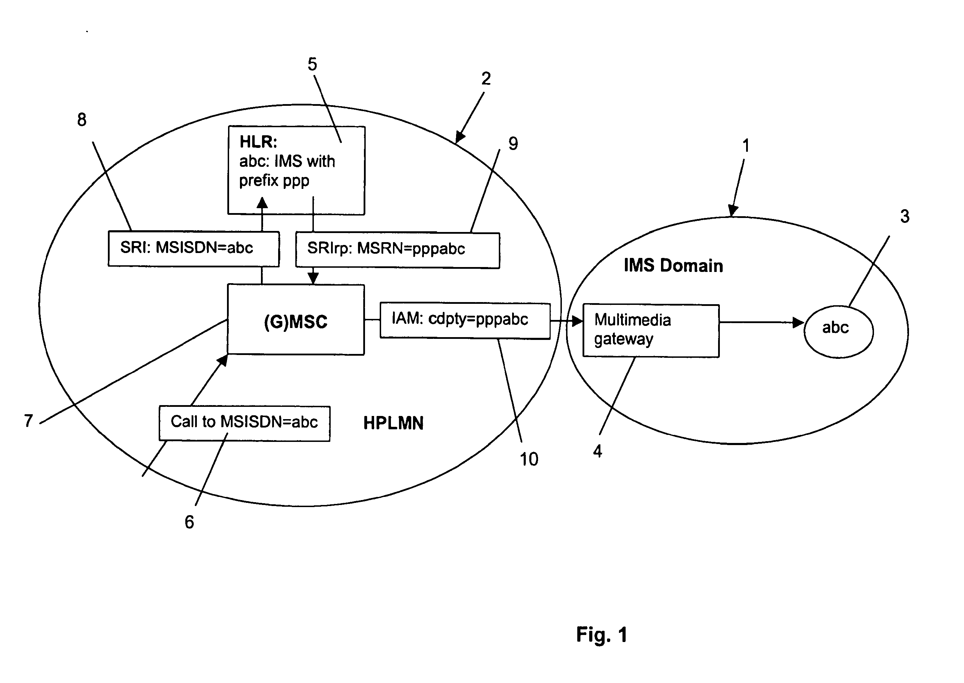

Figure 1 is a block diagram of the network elements involved with the present invention showing the information flow during voice IMS services.

The architecture and operation of GSM and UMTS telecommunication networks and IP based Multimedia Subsystems are well known to persons skilled in the art and therefore will not be described in detail. For further information we refer to the European Telecommunications Standards Institute ETSI and its technical specifications by which are incorporated herein by reference.

An IMS subscriber 3 shall get all services within a well-defined IMS domain. Especially standard voice call services shall be provided to that subscriber.

To interconnect the IMS domain 1 to a (H)PLMN 2 and/or PSTN, a well-defined multimedia gateway function 4 is implemented in the IMS domain 1. The multimedia gateway 4 interconnects the IMS domain 1 with the (H)PLMN 2 of the servicing network operator via standard CCS7 (SS7) interfaces using ISDN User Part (ISUP) protocols. The ISDN User Part is part of the SS7 (Signalling System No.7) protocol layer and used in the setting up, management, and release of trunks that carry voice and data between calling and called parties. To allow for terminating calls originated at the (H)PLMN 2 / PSTN with destination to an IMS subscriber 3, the call flow is as follows:

The IMS subscriber 3 is assigned a standard Mobile Subscriber International ISDN Number (MSISDN) according to E.164 from the number range of the network operator of the (H)PLMN 2 . The E.164 format of global switched telephone numbers are defined by the ITU-T (International Telecommunications Union - Telecommunications Standardization Sector) E164 standard. The 16 digit number is split into international, national and user number portions.

The network operator preferably operates both, the IMS domain 1 as well as the (H)PLMN 2 which is preferably based on GSM / UMTS-Standards. To enable an easy migration of subscription, the MSISDN is of the standard GSM / UMTS number range.

A terminating call from the (H)PLMN 2 / PSTN can be received by the IMS subscriber 3 roaming in the IMS domain 1, if the call passes through the multimedia gateway 4. For that, a terminating call to the IMS subscriber 3 from the (H)PLMN 2 / PSTN has to be routed to multimedia gateway 4.

The IMS subscriber 3 is assigned a standard subscription in the Home Location Register (HLR) 5 of the (H)PLMN 2 of the network operator which operates the GSM/UMTS network as well as the IMS domain 1.

In addition to that standard subscription, the IMS subscriber 3 preferably gets an additional flag in its subscription data, indicating an IMS subscription and a specific prefix "ppp", i.e. a sequence of numbers decimal or hexadecimal. Different prefixes may be used for different subscribers. There is a single prefix ppp per subscriber at one time.

At an incoming call 6 to the (H)PLMN 2 with a destination to an IMS subscriber, having assigned the MSISDN "abc", or an originating call within the (H)PLMN 2 with destination to an IMS subscriber, a (Gateway) Mobile Switching Centre ((G)MSC) 7 or an originating MSC shall perform a standard MAP:SRI interrogation 8 to the HLR 5 assigned to the subscriber as the destination is referenced by a standard MSISDN of a standard number range. The SRI, Send Routeing Information, is a Mobile Application Part (MAP) message sent by the (G)MSC 7 to the HLR 5 to request routing information in order to route a call towards the called mobile subscriber 3. The SRI message 8 includes the MSISDN="abc" of the subscriber 3 which is sent to the HLR 5.

A special function is implemented in HLR 5 which recognises that the received MSISDN (="abc") is for an IMS subscriber 3. When a SRI request is received from the interrogating MSC 7 due to a terminating call to an IMS subscriber 3 and with a reference MSISDN (="abc") of that IMS subscriber 3, the MSISDN of that IMS subscriber 3 is prefixed with the adequate routing prefix "ppp" described above.
This prefixed MSISDN is then sent from the HLR 5 to the interrogating MSC 7 using a SRI response message 9 which includes the "special" Mobile Station Roaming Number (MSRN="pppabc"). The MSRN is an E.164 defined telephone number used to route telephone calls in a mobile network from a (G)MSC to the target MSC 7. G(MSC) and target MSC can be identical as shown in the present example.

At interrogation, on receipt of the SRI response MSRN 9 in the MSC 7, the terminating call is then routed to the multimedia gateway 4 via an Initial Address Message 10, IAM, which is part of the ISUP call set up. The message is used to seize a circuit and transfer addressing and call handling / routing information of the called party. The multimedia gateway 4 routes the call to the IMS subscriber 3 according to that prefix received, irrespective of the MSISDN part of the prefixed MSISDN. Routing tables in the (H)PLMN 2 shall be configured for that.

### List of Reference Numerals and Abbreviations

- 1: IMS domain
- 2: (H)PLMN
- 3: IMS subscriber
- 4: Multimedia Gateway
- 5: HLR
- 6: Incoming call
- 7: (G)MSC
- 8: SRI message
- 9: SRI response message
- 10: IAM message

- IMS: IP based Multimedia Subsystem
- GSM: Global System for Mobile Communications
- UMTS: Universal Mobile Telecommunication Service
- PSTN: Public Switched Telephone Network
- PLMN: Public Land Mobile Network
- MSC: Mobile Switching Centre
- HLR: Home Location Register
- HPLMN: Home Public Land Mobile Network
- CCS7: Common Channel Signalling No. 7 (= SS7:Signalling System No.7)
- ISUP: ISDN User Part (Inter Switch Signalling)
- MSISDN: Mobile Subscriber International ISDN Number
- E.164: ITU-T Recommendation "Assigned Country Codes"
- MAP: Mobile Application Part
- SRI: Send Routeing Information
- MSRN: Mobile Station Roaming Number
- GMSC: Gateway MSC
- IAM: Initial Address Message

## Claims

1. Method for enabling voice telecommunication services provided by a mobile communication network to a subscriber (3) of an IP Multimedia Subsystem, IMS, (1) wherein the IMS subscriber within an IMS domain is assigned a standard subscription to a mobile communication network (2) operating the IMS, wherein in addition to the standard subscription the IMS subscriber (3) is assigned a routing prefix, wherein an incoming voice call is routed to the IMS subscriber (3) according to the routing prefix, **characterized in that**
the IMS subscriber (3) is assigned an additional flag in its subscription data indicating an IMS subscription.

2. Method according to claim 1, wherein based on an incoming voice call (6) with a destination to the IMS subscriber, a responsible Mobile Switching Centre (7) performs an interrogation (8) to a Home Location register, HLR, (5) assigned to the subscriber (3) to request routing information in order to route the call towards the called IMS subscriber (3), wherein the SRI message (8) includes a Mobile Subscriber International ISDN Number, MSISDN, of the subscriber (3).

3. Method according to any of claims 1 or 2, wherein a special function is implemented in HLR (5) which recognises that the received MSISDN is for an IMS subscriber (3), wherein the MSISDN of that IMS subscriber (3) is prefixed with the routing prefix.

4. Method according to any of claims 1 to 3, wherein the MSISDN including the routing prefix is returned from the HLR (5) to the interrogating Mobile Switching Centre (7) in form of a Mobile Station Roaming Number, MSRN, (9).

5. Method according to any of claims 1 to 4, wherein on receipt of the MSRN 9 in the Mobile Switching Centre (7), the call is then routed to a multimedia gateway (4) which subsequently routes the call to the IMS subscriber (3) according to that routing prefix received.

6. A system for enabling voice telecommunication services provided by a mobile communication network to an IMS subscriber (3) of an IP Multimedia Subsystem, IMS, wherein a network element in form of a multimedia gateway (4) is provided for interconnecting the mobile communication network (2) with an IMS domain (1), wherein the multimedia gateway (4) routes an incoming voice call to the IMS subscriber (3) according to a routing prefix assigned to the IMS subscriber, **characterized in that** subscription data assigned to the IMS subscriber (3) contain an additional flag indicating an IMS subscription.

7. System according to claim 6, wherein the multimedia gateway (4) interconnects the IMS domain (1) with the mobile communication network (2) via standard CCS7 (SS7) interfaces using ISDN User Part (ISUP) protocols.

8. System according to claim 6 or 7, wherein a Mobile Station Roaming Number, MSRN, (9) is defined comprising the MSISDN and the routing prefix.

9. Data processing software program comprising a program code which performs a method according to the claims 1-5 when it is executed on a suitable data processing system.

10. A product containing a data processing program comprising a program code which is executable on a data processing system for performing a method according to claims 1-5.

## Patentansprüche

1. Ein Verfahren zum Aktivieren von Sprechtelekommunikationsdienstleistungen, die einem Teilnehmer (3) an einem IP-Multimedia-Untersystem, IMS, (1), von einem Mobilkommunikationsnetzwerk zur Verfügung gestellt werden, wobei dem IMS-Teilnehmer innerhalb eines IMS-Bereichs eine Standardbeteiligung an einem Mobilkommunikationsnetzwerk (2) zugeordnet wird, das das IMS betreibt, wobei dem IMS-Teilnehmer (3) zusätzlich zur Standardbeteiligung eine Leitwegvorwahlnummer zugeordnet wird, wobei ein eingehender Sprechanruf an den IMS-Teilnehmer (3) gemäß der Leitwegvorwahlnummer geleitet wird, **dadurch gekennzeichnet, dass** dem IMS-Teilnehmer (3) zusätzlich ein Kennzeichen in seinen Teilnahmedaten zugeordnet wird, die eine IMS-Teilnahme ausweisen.

2. Ein Verfahren gemäß Anspruch 1, wobei -basierend auf einem eingehenden Sprechanruf (6) mit dem Ziel IMS-Teilnehmer- ein ansprechbares Mobilschaltzentrum (7) eine Abfrage eines Ausgangsortregisters, HLR, (5), das dem Teilnehmer (3) zugeordnet wurde, durchführt, um Leitinformationen anzufragen, um den Anruf an den angerufenen IMS-Teilnehmer (3) zu leiten, wobei die SRI-Nachricht (8) eine internationale ISDN-Nummer eines Mobilteilnehmers, MSISDN, des Teilnehmers (3) beinhaltet.

3. Ein Verfahren gemäß irgendeinem der Ansprüche 1 oder 2, wobei im HLR (5) eine Sonderfunktion implementiert ist, die erkennt, dass die erhaltene MSISDN für einen IMS-Teilnehmer (3) bestimmt ist, wobei die MSISDN jenes IMS-Teilnehmers (3) vorher mit der Leitwegvorwahlnummer festgesetzt wird.

4. Ein Verfahren gemäß irgendeinem der Ansprüche 1 bis 3, wobei die MSISDN, die die Leitwegvorwahlnummer beinhaltet, vom HLR (5) an das anfragende Mobilschaltzentrum (7) in Form einer Rufbereichswechselnummer einer Mobilstation, MSRN, (9), zurückgegeben wird.

5. Ein Verfahren gemäß irgendeinem der Ansprüche 1 bis 4, wobei der Anruf bei Erhalt der MSRN (9) im Mobilschaltzentrum (7) dann an eine Multimedianetzübergangseinheit (4) geleitet wird, die den Anruf danach an den IMS-Teilnehmer (3) gemäß jener erhaltenen Leitwegvorwahlnummer leitet.

6. Ein System zur Aktivierung von Sprechverbindungsdienstleistungen, die einem IMS-Teilnehmer (3) an einem IP-Multimediauntersystem, IMS, von einem Mobilkommunikationsnetzwerk zur Verfügung gestellt werden, wobei ein Netzwerkelement in Form einer Multimedianetzübergangseinheit (4) zur Verbindung des Mobilkommunikationsnetzwerkes (2) mit einem IMS-Bereich (1) zur Verfügung gestellt wird, wobei die Multimedianetzübergangseinheit (4) einen eingehenden Sprechanruf gemäß einer Leitwegvorwahlnummer, die dem IMS-Teilnehmer zugeordnet wurde, an den IMS-Teilnehmer (3) leitet, **dadurch gekennzeichnet, dass** die Teilnahmedaten, die dem IMS-Teilnehmer (3) zugeordnet wurden, ein zusätzliches Kennzeichen beinhalten, das eine IMS-Teilnahme ausweist.

7. Ein System gemäß Anspruch 6, wobei die Multimedianetzübergangseinheit (4) den IMS-Bereich (1) mit dem Mobilkommunikationsnetzwerk (2) über die Standard-CCS7-(SS7)-Interfaces unter Verwendung von ISDN-Nutzerteilprotokollen (ISUP) verbindet.

8. Ein System gemäß Ansprüch 6 oder 7, wobei eine Mobilstation-Rufsbereichswechelnummer, MSRN, (9), definiert wird, die die MSISDN und die Leitwegvorwahl-Nummer umfasst.

9. Ein Datenverarbeitungssoftwareprogramm, das einen Programmcode umfasst, der ein Verfahren gemäß der Ansprüche 1 bis 5 durchführt, wenn es in einem geeigneten Datenverarbeitungssystem durchgeführt wird.

10. Ein Produkt, das ein Datenverarbeitungsprogramm beinhaltet, das einen Programmcode umfasst, der in einem Datenverarbeitungssystem durchführbar ist, um ein Verfahren gemäß der Ansprüche 1 bis 5 durchzuführen.

## Revendications

1. Méthode pour permettre des services de télécommunication vocaux fournis par un réseau de communication mobile à un abonné (3) d'un sous-système multimédia IP, IMS, (1), selon laquelle à l'intérieur d'un domaine IMS, un abonnement standard à un réseau de communication mobile (2) utilisant l'IMS est attribué à l'abonné IMS, selon laquelle un préfixe d'acheminement est attribué à l'abonné IMS (3) en plus de l'abonnement standard, et selon laquelle un appel vocal entrant est acheminé vers l'abonné IMS (3) selon le préfixe d'acheminement,
**caractérisée en ce qu'**un indicateur supplémentaire indiquant un abonnement IMS est attribué à l'abonné IMS (3), dans ses données d'abonnement.

2. Méthode selon la revendication 1, selon laquelle sur la base d'un appel vocal entrant (6) à destination de l'abonné IMS, un centre de commutation du service mobile responsable (7) effectue une interrogation (8) d'un enregistreur de localisation nominal, HLR, (5) attribué à l'abonné (3), pour demander des informations d'acheminement afin d'acheminer l'appel vers l'abonné IMS (3) appelé, le message SRI (8) comportant un numéro RNIS international d'abonné mobile, MSISDN, de l'abonné (3).

3. Méthode selon la revendication 1 ou 2, selon laquelle une fonction spéciale est mise en oeuvre dans l'enregistreur HLR (5), qui reconnaît que le MSISDN reçu est pour un abonné IMS (3), le MSISDN de cet abonné IMS (3) étant pourvu du préfixe d'acheminement.

4. Méthode selon l'une quelconque des revendications 1 à 3, selon laquelle le MSISDN qui comporte le préfixe d'acheminement est ramené de l'enregistreur HLR (5) vers le centre de commutation (7) d'interrogation, sous la forme d'un numéro de réacheminement de station mobile, MSRN, (9).

5. Méthode selon l'une quelconque des revendications 1 à 4, selon laquelle à réception du MSRN 9 dans le centre de commutation du service mobile (7), l'appel est acheminé jusqu'à une passerelle multimédia (4) qui achemine ensuite l'appel jusqu'à l'abonné IMS (3) selon le préfixe d'acheminement reçu.

6. Système pour permettre des services de télécommunication vocaux fournis par un réseau de communication mobile à un abonné IMS (3) d'un sous-système multimédia IP, IMS, dans lequel un élément de réseau en forme de passerelle multimédia (4) est prévu pour l'interconnexion entre le réseau de communication mobile (2) et un domaine IMS (1), et dans lequel la passerelle multimédia (4) achemine un appel vocal entrant jusqu'à l'abonné IMS (3) selon un préfixe d'acheminement attribué à l'abonné IMS,
**caractérisé en ce que** les données d'abonnement attribuées à l'abonné IMS (3) contiennent un indicateur supplémentaire qui indique un abonnement IMS.

7. Système selon la revendication 6, dans lequel la passerelle multimédia (4) relie le domaine IMS (1) au réseau de communication mobile (2) par l'intermédiaire d'interfaces CCS7 (SS7) standard qui utilisent des protocoles de sous-système utilisateur RNIS (ISUP).

8. Système selon la revendication 6 ou 7, dans lequel un numéro de réacheminement de station mobile, MSRN, (9) est défini, qui comprend le MSISDN et le préfixe d'acheminement.

9. Logiciel informatique comprenant un code de programme qui applique une méthode selon l'une des revendications 1 à 5 lorsqu'il est exécuté sur un système informatique approprié.

10. Produit contenant un programme informatique qui comprend un code de programme apte à être exécuté sur un système informatique pour appliquer une méthode selon les revendications 1 à 5.
